Europäisches Patentamt

European Patent Office

Office européen des brevets

(11) Veröffentlichungsnummer: **0 427 881 A1**

# (12) EUROPÄISCHE PATENTANMELDUNG

(21) Anmeldenummer: 89121027.0

(22) Anmeldetag: **13.11.89**

(51) Int. Cl.⁵: **B65G 53/66**

(43) Veröffentlichungstag der Anmeldung:
**22.05.91 Patentblatt 91/21**

(84) Benannte Vertragsstaaten:
**BE CH DE ES FR IT LI NL**

(71) Anmelder: **Fritz Werner
Industrie-Ausrüstungen GmbH
Industriestrasse Postfach 1254/1255
W-6222 Geisenheim(DE)**

(72) Erfinder: **Petersen, Hinrich, Dr.- Ing.
Pulignystrasse 17
W-6222 Geisenheim-Johannisberg(DE)**

(74) Vertreter: **Körber, Wolfhart, Dr.rer.nat.
Patentanwälte Dipl.-Ing. H. Mitscherlich
Dipl.-Ing. K. Gunschmann Dr.rer.nat. W.
Körber Dipl.Ing. J. Schmidt-Evers Dipl.-Ing.
W. Melzer Steinsdorfstrasse 10
W-8000 München 22(DE)**

(54) Verfahren und Vorrichtung zur Regelung des Volumenstroms einer Saugluftförderanlage.

(57) Es ist Aufgabe der Erfindung, das Verfahren und die Vorrichtung so weiterzubilden, daß die im Vollastbetrieb auftretende Strömungsgeschwindigkeit der Saugluftförderanlage auch im Teillast- und Leerlaufbetrieb im wesentlichen aufrecherhalten wird.

Diese Aufgabe wird verfahrensgemäß dadurch gelöst, daß dem Verdrängergebläse zusätzlich zur Förderluft aus der Saugluftförderanlage Umgebungsluft zugeführt wird, wobei der Volumenstrom der zugeführten Umgebungsluft in Abhängigkeit vom Lastzustand der Saugluftförderanlage geregelt wird. Vorrichtungsgemäß wird die Aufgabe dadurch gelöst, daß ein vom Ansaugstutzen (12) abzweigender, zur Umgebungsluff hin offener Abzweigstutzen (13) vorgesehen ist, und daß im Abzweigstutzen ein in Abhängigkeit vom Lastzustand der Saugluftförderanlage verstellbares Drosselventil (14) angeordnet ist.

Fig. 2

EP 0 427 881 A1

## VERFAHREN UND VORRICHTUNG ZUR REGELUNG DES VOLUMENSTROMS EINER SAUGLUFTFÖRDERAN-LAGE

Die Erfindung betrifft ein Verfahren zur Regelung des Volumenstroms einer Saugluftförderanlage mit einem Verdrängergebläse. Die Erfindung betrifft ferner eine für eine Saugluftförderanlage vorgesehene Saugvorrichtung mit einem Verdrängergebläse, das einen Ansaugstutzen zum Anschluß an eine Saugleitung der Saugluftförderanlage aufweist.

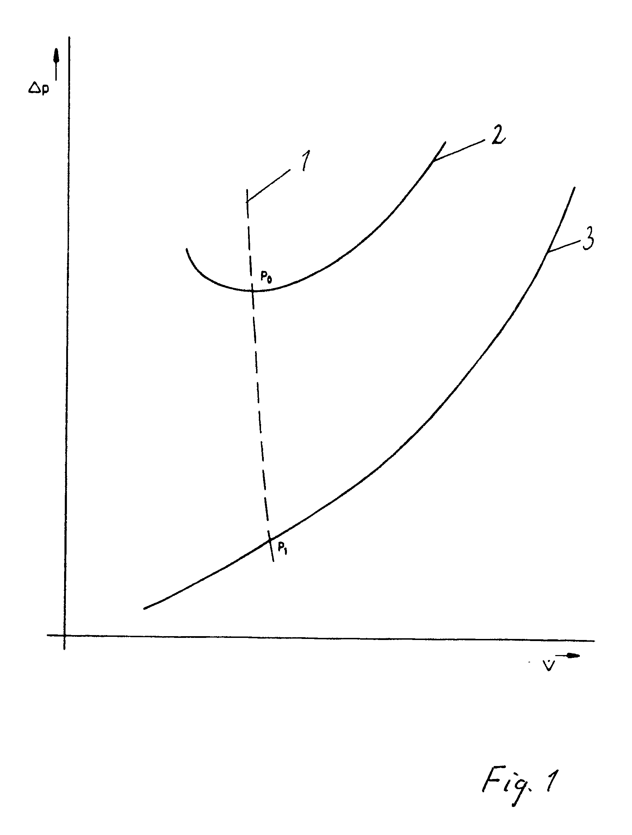

Verdrängergebläse, wie z. B. Drehkolben- oder Roots-Gebläse werden häufig in Saugluftförderanlagen eingesetzt, die mit unterschiedlichen Lastzuständen arbeiten. Fig. 1 zeigt die Kennlinie eines Drehkolbengebläses sowie die Anlagenkennlinien einer Saugluftförderanlage bei Vollast, d. h. bei Förderung der maximal möglichen Fördergutmenge, und im Leerlauf, d. h. bei reiner Luftförderung. Der Schnittpunkt der den Vollastzustand kennzeichnenden Anlagenkennlinie mit der Kennlinie des Drehkolbengebläses ergibt den Betriebspunkt $P_0$ der Saugluftförderanlage, der so gewählt ist, daß einerseits die Strömungsgeschwindigkeit der Luft zwecks Einsparung von Energiekosten möglichst niedrig, andererseits jedoch zur Vermeidung von Stauungen in der Förderleitung möglichst hoch ist.

Mit Reduzierung der Materialförderung verschiebt sich der Betriebspunkt entlang der Gebläsekennlinie bis maximal zum Schnittpunkt $P_1$ mit der den Leerlauf kennzeichnenden Anlagenkennlinie. Dabei bleibt aufgrund der Charakteristik des Verdrängergebläses der Ansaugvolumenstrom im wesentlichen konstant, während der erforderliche Differenzdruck und damit der Leistungsbedarf des Gebläses abfällt. Diesem Vorteil steht der Nachteil gegenüber, daß die Luftströmung in der Förderleitung mit abfallendem Differenzdruck in geringerem Maße als bei Vollastbetrieb expandiert. Das sich dabei erge bende kleinere Luftvolumen strömt jedoch mit höherer Geschwindigkeit, um das andernfalls auftretende Volumenstromdefizit zu dem im gesamten Lastbereich im wesentlichen konstanten Ansaugvolumenstrom des Verdrängergebläses auszugleichen. Mit anderen Worten, mit der höheren Luftgeschwindigkeit wird derjenige Volumenstrom erzeugt, der notwendig ist, um den konstanten Volumenstrombedarf des Verdrängergebläses zu decken. Beispielsweise kann sich die Luftgeschwindigkeit an der das Fördergut ansaugenden Saugdüse im Leerlaufbetrieb gegenüber dem Vollastbetrieb verdoppeln. Dies führt zu unerwünschtem zusätzlichen Verschleiß in der Förderleitung und zu Beschädigungen empfindlicher Fördergüter.

Es ist Aufgabe der Erfindung, ein Verfahren und eine Vorrichtung der eingangs genannten Art so weiterzubilden, daß die im Vollastbetrieb auftretende Strömungsgeschwindigkeit der Saugluftförderanlage auch im Teillast- und Leerlaufbetrieb im wesentlichen aufrechterhalten wird.

Diese Aufgabe wird erfindungsgemäß durch die Kennzeichen der Patentansprüche 1 und 5 gelöst.

Auf diese Weise wird im Teillast- und Leerlaufbetrieb der Volumenstrombedarf des Verdrängergebläses im Gegensatz zum Stand der Technik nicht durch eine gegenüber dem Vollastbetrieb erhöhte Strömungsgeschwindigkeit des Volumenstroms, sondern durch Vergrößerung des Luftvolumens gedeckt. Die zu diesem Zweck dem Verdrängergebläse zusätzlich zur Förderluft aus der Saugluftförderanlage zugeführte Umgebungsluft wird in ihrer Menge entsprechend dem Lastzustand der Saugluftförderanlage im Teillast- und Leerlaufbetrieb über das verstellbare Drosselventil geregelt. Gemäß den Unteransprüchen 2 bis 11 können die Lastzustände der Saugluftförderanlage mit Hilfe des Differenzdrucks in der Anlage, der Strömungsgeschwindigkeit des Volumenstroms in der Anlage oder der angesaugten Fördergutmenge ermittelt werden.

Nachstehend ist die Erfindung anhand eines Ausführungsbeispiels unter Bezugnahme auf die Zeichnung nähere beschrieben. Es zeigen

Fig. 1 ein Diagramm mit den Kennlinien einer Saugluftförderanlage und eines Verdrängergebläses,

Fig. 2 eine schematische Darstellung einer Saugluftförderanlage mit einer ein Verdrängergebläse aufweisenden Saugvorrichtung gemäß der Erfindung, und

Fig. 3 ein Diagramm des Drosseldurchmessers über dem Differenzdruck.

Im Diagramm nach Fig. 1 ist mit einer Kennlinie 1 eines Verdrängergebläses der von diesem erzeugte Differenzdruck $\Delta p$ als Funktion des angesaugten Volumenstroms V dargestellt. Wie bekannt, verläuft die Kennlinie eines Verdrängergebläses ziemlich steil und zeigt, daß dieses Gebläse, wenn man die Spaltverluste vernachlässigt, einen im wesentlichen konstanten Volumenstrom über einen großen Differenzdruckbereich liefert. Die weiter dargestellten Kennlinien 2, 3 sind Anlagenkennlinien einer Saugluftförderanlage, wobei die Kennlinie 2 den Vollastzustand, d. h. die maximale Materialförderung, und die Kennlinie 3 den Leerlaufzustand, d. h. die reine Luftförderung, darstellt. Der Schnittpunkt der Kennlinie 2 mit der Kennlinie 1 ergibt den Betriebspunkt $P_0$ der Anlage bzw. des Verdrängergebläses, der so gewählt ist, daß einerseits die Luftgeschwindigkeit zur Einsparung von Energiekosten möglichst gering, jedoch andererseits ausreichend groß ist, um Stauungen in der Förderleitung zu vermeiden. Wenn die Materialförderung reduziert wird, verschiebt sich der Betriebspunkt $P_o$ entlang der Kennlinie 1 bis maximal zum Schnittpunkt $P_1$ mit der Anlagenkennlinie 3 für reine Luftförderung. Entsprechend der Kennlinie 1 bleibt dabei der Ansaugvolumenstrom des Verdrängergebläses nahezu konstant, während der Differenzdruck und damit der Leistungsbedarf absinken.

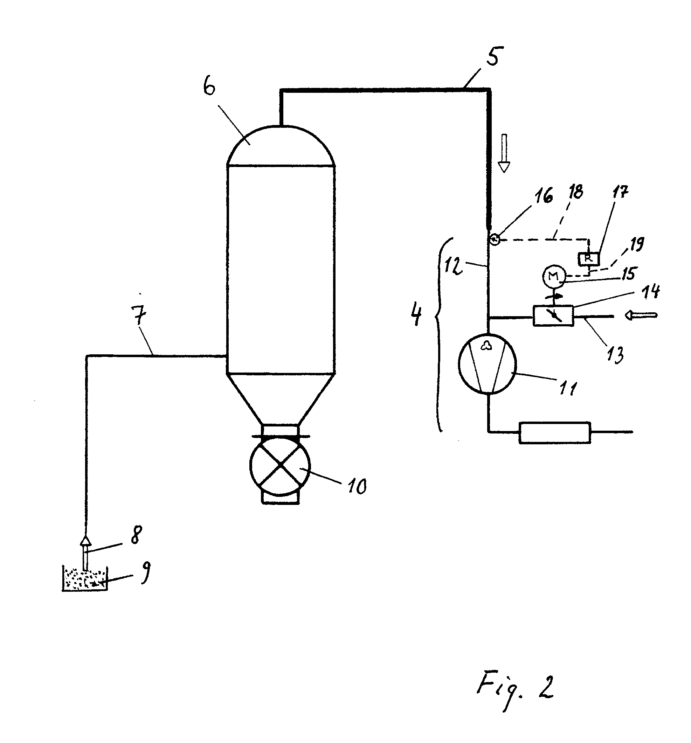

Die Saugluftförderanlage nach Fig. 2 umfaßt die erfindungsgemäße Saugvorrichtung 4, die über eine Saugleitung 5 an einen Abscheider 6 angeschlossen ist. Vom Abscheider 6 führt eine Förderleitung 7 zur einer mit einem Pfeil 8 angedeuteten Saugdüse zum Ansaugen eines zu fördernden Materials oder Fördergutes 9. Eine Auslaßschleuse 10 ist am unteren Ende des Abscheiders 6 angeordnet.

Die Saugvorrichtung 4 umfaßt ein Drehkolben- oder Roots-Gebläse 11 mit einem an die Saugleitung 5 angeschlossenen Ansaugstutzen 12, von dem ein zur Umgebungsluft hin offener Abzweigstutzen 13 abzweigt. In letzterem ist ein verstellbares Drosselventil 14 in Form eines Blenden-Regulierschiebers mit einem Stellmotor 15 angeordnet. Strömungsaufwärts des Abzweigstutzens 13 ist im Ansaugstutzen 12 ein Drucksensor 16 zum Erfassen des Differenzdrucks angebracht. Ein Regler 17 ist über eine Signalleitung 18 an den Drucksensor 16 und über eine Stellsignalleitung 19 an den Stellmotor 15 angeschlossen. Der Regler 17 ist ein Proportionalregler mit einem Sollwerteingang und zur Verstellung des Drosselventils 14 umgekehrt proportional zum ermittelten Differenzdruck vorgesehen.

Die Funktion der Saugluftförderanlage mit der erfindungsgemäßen Saugvorrichtung 4 ist wie folgt:

Im Betrieb der Saugluftförderanlage erzeugt das Verdrängergebläse 11 einen Saugluftstrom, der das Fördergut 9 über die Saugdüse 8 ansaugt und über die Förderleitung 7 zum Abscheider 6 führt. Hier schlägt sich das Fördergut 9 infolge der Querschnittsvergrößerung nieder und wird durch die Auslaßschleuse 10 an beispielsweise eine Förderschnecke abgegeben.

Der über die Saugdüse 8 mit bestimmter Strömungsgeschwindigkeit angesaugte Luftvolumenstrom expandiert entlang der Förderleitung und zum geringeren Teil entlang der Saugleitung infolge des dort auftretenden Druckabfalls und ändert dem entsprechend seine Strömungsgeschwindigkeit. Bei maximaler Materialförderung, d. h. bei Vollast, ist der Druckabfall und damit die Expansion am größten und die Strömungsgeschwindigkeit des Luftvolumenstroms am geringsten. Das Verdrängergebläse ist so ausgelegt, daß sein nahezu konstanter Ansaugvolumenstrom im wesentlichen gleich dem im Vollastbetrieb expandierten Luftvolumenstrom ist. Der diesem Luftvolumenstrom entsprechende Differenzdruck wird als Sollwert dem Regler 17 über den Sollwerteingang vorgegeben.

Der Drucksensor 16 erfaßt den sich mit dem Lastzustand der Saugluftförderanlage ändernden Differenzdruck und übermittelt über die Signalleitung 18 ein entsprechendes Eingangssignal an den Regler 17, der aus dem diesem Eingangssignal entsprechenden Ist-Wert und dem vorgegebenen Sollwert einen Differenzwert ermittelt und ein diesem entsprechendes Ausgangssignal über die Stellsignalleitung 19 dem Stellmotor 15 des Drosselventils 14 zur Verstellung desselben zuführt.

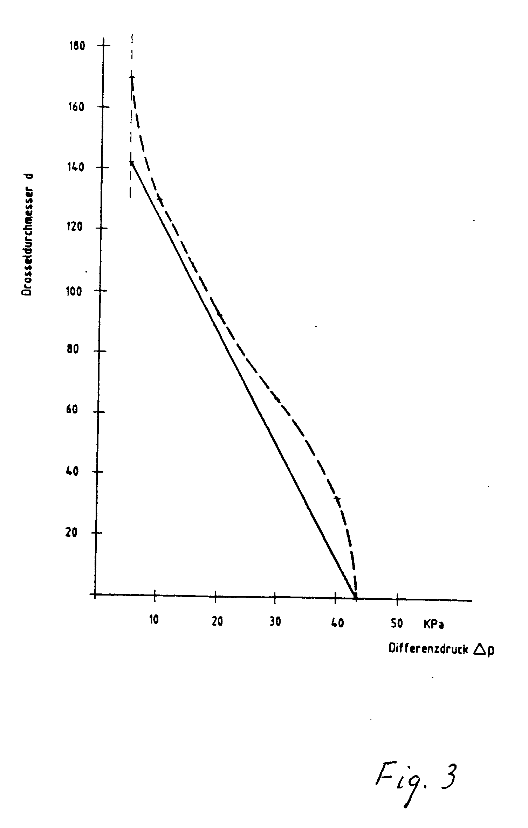

Bei Vollast ist der vom Drucksensor 16 erfaßte Ist-Wert des Differenzdrucks (von 44 KPa gemäß Fig. 3) gleich dem Sollwert des Differenzdrucks; die Differenz beider Werte ist somit gleich Null und dementsprechend wird das Drosselventil auf eine Öffnungsweite oder einen Drosseldurchmesser d gleich Null eingestellt (vgl. Fig. 3), sodaß dem angesaugten Luftvolumenstrom im Ansaugstutzen 12 keine Umgebungsluft über den Abzweigstutzen 13 zugeführt werden kann.

Mit geringer werdender Materialförderung sinkt der Differenzdruck, sodaß sich die Differenz zwischen dessen Ist-Wert und Sollwert vergrößert und das Drosselventil 14 dementsprechend auf einen größeren Drosseldurchmesser d eingestellt wird. Diese Einstellung des Drosseldurchmessers d als Funktion des Differenzdrucks ist in Fig. 3 deutlich zu erkennen. Mit zunehmendem Drosseldurchmesser d wird dem Luftvolumenstrom im Ansaugstutzen 12 und damit dem Verdrängergebläse 11 entsprechend mehr Umgebungsluft zugeführt, sodaß das im Teillast- und Leerlaufbetrieb andernfalls auftretende Luftvolumenstromdefizit zum Ansaugvolumenstrom des Verdrängergebläses 11 gedeckt wird. Mit anderen Worten, die Summe des Luftvolumenstroms in der Saugluftförderanlage und des Volumenstroms der zugeführten Umgebungsluft ist im wesentlichen gleich dem Ansaugvolumenstrom des Verdrängergebläses 11.

Die theoretischen Grundlagen für das erfindungsgemäße Verfahren sind wie folgt:

Der Ansaugvolumenstrom des Verdrängergebläses setzt sich zusammen aus dem Volumenstrom in der Saugluftförderanlage und dem Volumenstrom am Drosselventil:

$$V_{Gebläse} = V_{Saugrohr} + V_{Drossel}$$

Der Volumenstrom an der Saugdüse ist vorgegeben und entspricht dem Volumenstrom an der Düse bei Vollast:

$$V_{Düse\ soll} = V_{Düse\ bei\ Vollast}$$

Der Volumenstrom in der Saugleitung wird aufgrund der Expansion aus dem Volumenstrom an der Saugdüse bestimmt:

$$V_{\text{Saugleitg. soll}} = V_{\text{Düse soll}} \times \frac{P_O}{P_O - \Delta p}$$

wobei $P_O$ den Umgebungsdruck und $\Delta p$ den Differenzdruck in der Anlage darstellen.

Aus diesen Abhängigkeiten ergibt sich somit ein Zusammenhang zwischen dem Volumenstrom am Drosselventil und dem Differenzdruck vor dem Verdrängergebläse:

$$V_{\text{Drossel}} = V_{\text{Gebläse}} - V_{\text{Düse soll}} \times \frac{P_O}{P_O - \Delta p}$$

Die Größe des Querschnitts des Drosselventils wird bestimmt nach Bernoulli (Blendendurchflußgleichung):

$$V_{\text{Drossel}} = \alpha \times F_{\text{Drossel}} \times \sqrt{\frac{2 \times \Delta p}{\rho}}$$

wobei $\rho$ die Dichte der Luft im Abzweigstutzen an der Drosselstelle darstellt. Aus den beiden vorgenannten Gleichungen kann der Querschnitt $F_{\text{Drossel}}$ in Abhängigkeit vom Differenzdruck $\Delta p$ ermittelt werden.

Fig. 3 zeigt für eine Saugluftförderanlage bestimmter Abmessungen mit der gestrichelten Linie die errechnete Abhängigkeit des Drosseldurchmessers d vom Differenzdruck $\Delta p$ und mit der durchgezogenen Linie die entsprechende Kurve des tatsächlich verwendeten Drosseldurchmessers. Letztere Kurve ist unterhalb der erstgenannten Kurve angeordnet. Auf diese Weise wird verhindert, daß der tatsächliche Volumenstrom unter den Soll-Volumenstrom abfällt und Verstopfungen in der Saugluftförderanlage auftreten.

Die Erfindung eignet sich zum Einsatz mit sämtlichen Gebläsen, die eine dem Roots-Gebläse ähnliche Charakteristik aufweisen.

**Ansprüche**

1. Verfahren zur Regelung des Volumenstroms einer Saugluftförderanlage mit einem Verdrängergebläse, dadurch gekennzeichnet, daß dem Verdrängergebläse (11) zusätzlich zur Förderluft aus der Saugluftförderanlage Umgebungsluft zugeführt wird, wobei der Volumenstrom der zugeführten Umgebungsluft in Abhängigkeit vom Lastzustand der Saugluftförderanlage geregelt wird.

2. Verfahren nach Anspruch 1, dadurch gekennzeichnet, daß der Volumenstrom der zugeführten Umgebungsluft umgekehrt proportional zum Differenzdruck ($\Delta p$) in der Saugluftförderanlage geregelt wird.

3. Verfahren nach Anspruch 1, dadurch gekennzeichnet, daß der Volumenstrom der zugeführten Umgebungsluft proportional zur Strömungsgeschwindigkeit des Volumenstroms in der Saugluftförderanlage geregelt wird.

4. Verfahren nach Anspruch 1, dadurch gekennzeichnet, daß der Volumenstrom der zugeführten Umgebungsluft umgekehrt proportional zu der im Volumenstrom in der Saugluftförderanlage mitgeführten Fördergutmenge (9) geregelt wird.

5. Saugvorrichtung für eine Saugluftförderanlage, mit einem Verdrängergebläse, das einen Ansaugstutzen zum Anschluß an eine Saugleitung der Saugluftförderanlage aufweist, gekennzeichnet durch, einen vom Ansaugstutzen (12) abzweigenden, zur Umgebungsluft hin offenen Abzweigstutzen (13) und durch ein im Abzweigstutzen (13) angeordnetes, in Abhängigkeit vom Lastzustand der Saugluftförderanlage verstellbares Drosselventil (14).

6. Saugvorrichtung nach Anspruch 5, gekennzeichnet durch einen Drucksensor (16) zum Ermitteln des Differenzdrucks ($\Delta$p) in der Saugluftförderanlage und durch ein Regelglied (17) zum Verstellen des Drosselventils (14) umgekehrt proportional zum ermittelten Differenzdruck ($\Delta$p).

7. Saugvorrichtung nach Anspruch 6, dadurch gekennzeichnet, daß der Drucksensor (16) im Ansaugstutzen (12) strömungsaufwärts des Abzweigstutzens (13) angeordnet ist.

8. Saugvorrichtung nach Anspruch 5, gekennzeichnet durch einen Strömungsgeschwindigkeitsmesser zum Ermitteln der Strömungsgeschwindigkeit des Volumenstroms in der Saugluftförderanlage und durch ein Regelglied zum Verstellen des Drosselventils (14) proportional zur ermittelten Strömungsgeschwindigkeit.

9. Saugvorrichtung nach Anspruch 8, dadurch gekennzeichnet, daß der Strömungsgeschwindigkeitsmesser im Ansaugstutzen (12) strömungsaufwärts des Abzweigstutzens (13) angeordnet ist.

10. Saugvorrichtung nach Anspruch 5, gekennzeichnet durch eine Fördergutmengen-Meßeinrichtung zum Ermitteln der im Volumenstrom der Saugluftförderanlage mitgeführten För dergutmenge (9) und durch eine Regelglied zum Verstellen des Drosselventils (14) umgekehrt proportional zu ermittelten Fördergutmenge (9).

11. Saugvorrichtung nach Anspruch 10, dadurch gekennzeichnet, daß die Fördergutmengen-Meßeinrichtung ein Rauchdichtemesser ist.

Fig. 1

Fig. 2

Fig. 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| A | DE-A-2925587 (AB SVENSKA FLÄKTFABRIKEN)<br>* Seite 7, Zeilen 13 - 20; Figuren 1, 2 *<br>--- | 1, 5-7 | B65G53/66 |
| A | DE-C-433962 (MASCHINENFABRIK HARTMANN)<br>* Seite 1, Zeilen 1 - 35 *<br>----- | 1 | |
| | | | **RECHERCHIERTE SACHGEBIETE (Int. Cl.5 )**<br><br>B65G |

Der vorliegende Recherchenbericht wurde für alle Patentansprüche erstellt

| Recherchenort | Abschlußdatum der Recherche | Prüfer |
|---|---|---|
| BERLIN | 10 JULI 1990 | SIMON, J |

EPO FORM 1503 03.82 (P0403)